# EUROPÄISCHE PATENTANMELDUNG

(11) **EP 1 643 253 A1**
(43) Veröffentlichungstag der Anmeldung: **05.04.2006**
(21) Anmeldenummer: 05020979.0
(22) Anmeldetag: 27.09.2005
(51) Int. Cl.: G01N 35/00, B01L 3/00

(54) **Reagenzträger**

(30) Priorität: 29.09.2004 DE 102004047822
(71) Anmelder: Scil animal care company GmbH, 68519 Viernheim (DE)
(72) Erfinder: Rudloff, Peter, Dr., 68526 Ladenburg (DE)
(74) Vertreter: Reiser, Tonio Andreas

(57) **Zusammenfassung**

Die vorliegende Erfindung betrifft einen Reagenzträger (1) mit einem Tragkörper (2) zum Einsetzen in ein Analysegerät und mit wenigstens einer in dem Tragkörper (2) ausgebildeten Kavität (3, 3', 3") zur Aufnahme eines Reagenz für eine Untersuchung einer Körperflüssigkeit, insbesondere von Blutserum oder Blutplasma. Der erfindungsgemäße Reagenzträger ist dadurch gekennzeichnet, dass der Tragkörper (2) eine längliche Grundform mit Längsseiten (4, 4') und Querseiten (5, 5') aufweist und dass die Querseiten (5, 5') unterschiedlich lang sind.

## Beschreibung

Die vorliegende Erfindung betrifft einen Reagenzträger mit einem Tragkörper zum Einsetzen in ein Analysegerät und mit wenigstens einer in dem Tragkörper ausgebildeten Kavität zur Aufnahme eines Reagenz für eine Untersuchung einer Körperflüssigkeit, insbesondere von Blutserum oder Blutplasma, sowie ein Transportbehältnis mit einem solchen Reagenzträger.

Die Bestimmung von Substratmengen in Blutserum und Blutplasma mittels chemischer Reaktionen sowie die Messung von Enzymaktivitäten und die Evaluierung großer Moleküle in diesen Flüssigkeiten mittels immunologischer Tests, wird in der Human- und Tiermedizin regelmäßig zur Überprüfung des Gesundheitszustandes herangezogen. Für die Durchführung dieser Messungen sind teil- und vollautomatische Analysegeräte entwickelt worden, mit denen die gewünschten Untersuchungen einfach durchgeführt werden können. Dabei werden für die unterschiedlichen Bestimmungen in der Regel Reagenzien eingesetzt, die je nach der gewünschten Untersuchung unterschiedlich sein können.

Bei Analysegeräten kleinerer Labors, wie sie beispielsweise in Arzt- oder Tierarztpraxen anzufinden sind, ergibt sich dabei das Problem, die jeweils benötigten Reagenzien auf einfache Weise bereitzustellen. Hierbei ist zu berücksichtigen, dass für unterschiedliche Analysen verschiedene Reagenzien bzw. Kombinationen hiervon erforderlich sind.

Aufgabe der vorliegenden Erfindung ist es daher, einen Reagenzträger anzugeben, der einfach zu handhaben ist.

Diese Aufgabe wird bei einem Reagenzträger der eingangs genannten Art dadurch gelöst, dass der Tragkörper eine längliche Grundform mit Längsseiten und Querseiten aufweist und dass die Querseiten unterschiedlich lang sind.

Ein solcher Reagenzträger kann auf einfache Weise in einem Analysegerät eingesetzt werden. Er eignet sich besonders für die Aufnahme einer für eine Analyse erforderlichen Einmaldosis eines Reagenz bzw, einer Kombination von Reagenzien. Der erfindungsgemäße Reagenzträger hat darüber hinaus den Vorteil, eine platzsparende kreisförmige Anordnung der Reagenzträger nebeneinander auf einer drehbarer Halteplatte des Analysegeräts zu ermöglichen. Dabei ermöglicht es die Ausbildung mit unterschiedlich langen Querseiten, eine große Anzahl von Reagenzträgern in dem Analysegerät bereitzustellen. Gleichzeitig wird durch die erfindungsgemäße Gestaltung ein falsches Einsetzen der Reagenzträger in das Analysegerät bzw, dessen Halteplatte verhindert.

### Für die platzsparende Anordnung hat sich bewährt, wenn die

Längsseiten winklig zueinander angeordnet sind. Vorzugsweise schließen die Längsseiten einen Winkel zwischen 10° und 20°, insbesondere zwischen 13° und 17° ein. Gemäß einer vorteilhaften Ausgestaltung der Erfindung sind die Längsseiten 25 mm bis 35 mm lang, insbesondere zwischen 28 mm und 32 mm. Die kürzere Querseite ist vorzugsweise zwischen 7 mm und 9 mm und die längere Querseite zwischen 14 mm und 18 mm lang.

Indem mehrere, insbesondere drei Kavitäten vorgesehen sind, kann eine entsprechende Zahl von Reagenzien in einem einzigen Reagenzträger kombiniert bereitgestellt werden.

Die Bereitstellung der in der Regel unterschiedlichen Reagenzienmengen für einen Test wird dadurch verbessert, dass die Kavitäten unterschiedlich groß sind. Auf diese Weise kann die jeweils benötigte Menge an Reagenz bereitgestellt werden und gleichzeitig der Kontakt mit Sauerstoff gering gehalten werden. Dabei hat sich bewährt, wenn das Volumen der ersten Kavität 250 bis 350 ml und/oder das Volumen der zweiten Kavität 100 bis 150 ml und/oder das Volumen der dritten Kavität 60 bis 100 ml beträgt.

Die automatische Verarbeitung der Reagenzien in dem Analysegerät wird dadurch vereinfacht, dass die Kavitäten nebeneinander entlang einer geraden Linie angeordnet sind, da alle Kavitäten mit einer geradlinig bewegten Nadel zur Entnahme der Reagenzien bedient werden können.

Erfindungsgemäß ist darüber hinaus vorgehen, dass in der wenigstens einen Kavitäten ein Reagenz enthalten ist.

Zur leichten Entnahme des Reagenz bzw. der Reagenzien aus den Kavitäten ist vorgesehen, dass die wenigstens eine Kavität eine Entnahmeöffnung an der Oberseite des Reagenzträgers aufweist.

Eine weitere Verbesserung wird dadurch erzielt, dass die wenigstens eine Kavität eine Befüllöffnung aufweist, die vorteilhafter Weise an der Unterseite des Reagenzträgers angeordnet ist.

Indem die Öffnungsfläche der Befüllöffnung kleiner als die Öffnungsfläche der Entnahmeöffnung ist, kann die Kavität besser befüllt werden. Insbesondere ist es hierdurch möglich, die nach dem Befüllen in der Kavität enthaltene Gasphase gering zu halten. Hierdurch wird die Haltbarkeit der Reagenzien erheblich verbessert.

Dabei hat sich bewährt wenn die Öffnungsfläche der Befüllöffnung kleiner als 20 Prozent, insbesondere kleiner als 10 Prozent der Öffnungsfläche der Entnahmeöffnung ist.

Die Befüllbarkeit des Reagenzträgers wird dadurch weiter verbessert, dass die Befüllöffnung eine längliche, insbesondere ovale Form aufweist. In der Kavität enthaltenes Gas kann bei dem Befüllvorgang leichter austreten, so dass die Befüllung schneller erfolgen kann.

Besonders praktisch ist die Handhabung des Reagenzträgers, wenn das Reagenz in der wenigstens einen Kavität in flüssiger Form enthalten ist.

Auf die Haltbarkeit des Reagenz bzw, der Reagenzien wirkt sich dabei positiv aus, wenn die über dem Flüssigkeitsspiegel des Reagenz verbleibende Luft- bzw. Gasblase weniger als 2 Prozent des Volumens der jeweiligen Kavität eimimmt. Eine weitere Verbesserung wird dann erreicht, wenn die Luft- bzw. Gasblase weniger als 1 Prozent insbesondere weniger als 0,5 Prozent des Volumens der jeweiligen Kavität einnimmt.

Der sichere Transport des befüllten Reagenzträgers wird dadurch ermöglicht, dass die Entnahmeöffnung und/oder die Befüllöffnung durch jeweils eine Deckfolie verschlossen sind.

Die automatische Durchführung der Analysen kann erleichtert werden, wenn der Reagenzträger eine maschinenlesbare Information über das in der wenigstens einen Kavität enthaltene Reagenz bzw. die in den Kavitäten enthaltenen Reagenzien aufweist. Die Information kann dabei insbesondere in Form eines Strich- oder Punktcodes an dem Reagenzträger vorgesehen sein. Über die maschinenlesbare Information kann dabei automatisch durch das Analysegerät überprüft werden, ob der richtige für eine Analyse erforderliche Reagenzträger eingesetzt wurde. Fehlmessungen durch Einsetzen eines falschen Reagenzträgers können so vermieden werden.

Erfindungsgemäß ist darüber hinaus ein Transportbehältnis vorgesehen, mit einem Verbindungsabschnitt zum Einsetzen in das Analysegerät und mit wenigstens einem Aufnahmeraum für eine Mehrzahl von Reagenzträgern, wobei in dem Aufnahmeraum wenigstens ein Reagenzträger nach einem der vorangehenden Ansprüche enthalten ist.

Gemäß einer Weiterbildung dieses Erfindungsgedankens ist an oder in dem Transportbehältnis eine maschinenlesbare Information über den wenigstens einen in dem Behältnis enthaltenen Reagenzträger und/oder über die in dem wenigstens einen Reagenzträger enthaltenen Reagenzien vorgesehen.

Dabei kann die maschnenlesbare Information in einem an dem Transportbehältnis vorgesehenen Chip gespeichert sein.

Die Präzision der Analyseergebnisse wird dadurch verbessert, dass die maschinenlesbare Information des Transportbehältnisses Kalibrierungsdaten für die anhand der Reagenzien durchzuführenden Analysen enthält. Anhand der Kalibrierungsdaten können nicht oder nur kostspielig zu verhindernde Abweichungen der Reagenzien von der Sollbeschaffenheit durch das Analysegerät korrigiert werden.

Weitere Ziele, Merkmale, Vorteile und Anwendungsmöglichkeiten der vorliegenden Erfindung ergeben sich aus der nachfolgenden Beschreibung eines Ausführungsbeispiels anhand der Zeichnung. Dabei bilden alle beshriebenen und/oder bildlich dargestellten Merkmale für sich oder in beliebiger Kombination den Gegenstand der Erfindung, auch unabhängig von der Zusammenfassung in einzelnen Ansprüchen oder deren Rückbeziehung.

Es zeigen:
- Fig. 1:: einen erfindungsgemäßen Reagenzträger von oben;
- Fig. 2:: den erfindungsgemäßen Reagenzträger aus Figur 1 im Schnitt;
- Fig. 3:: den erfindungsgemäßen Reagenzträger aus Figur 1 von unten;
- Fig. 4:: den erfindungsgemäßen Reagenzträger aus Figur 1 von der Seite;
- Fig. 5:: ein erfindungsgemäßes Transportbehältnis für Reagenzträger von oben;
- Fig. 6:: das erfindungsgemäße Transportbehältnis aus Fig. 5 im Schnitt;
- Fig. 7:: das erfindungsgemäße Transportbehältnis aus Fig. 5 von der Seite;
- Fig. 8:: eine Halteplatt eines Analysegeräts mit Reagenzträgern nach Figur 1.

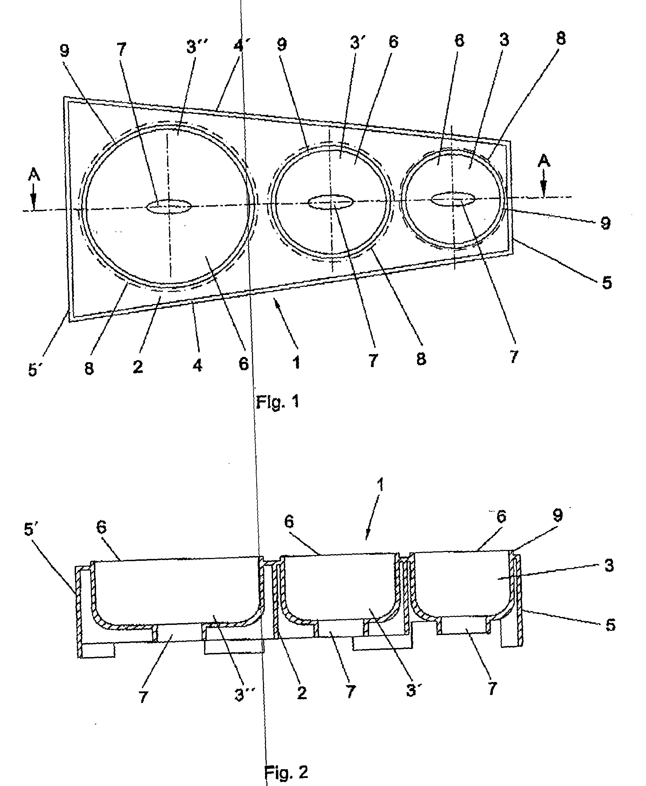

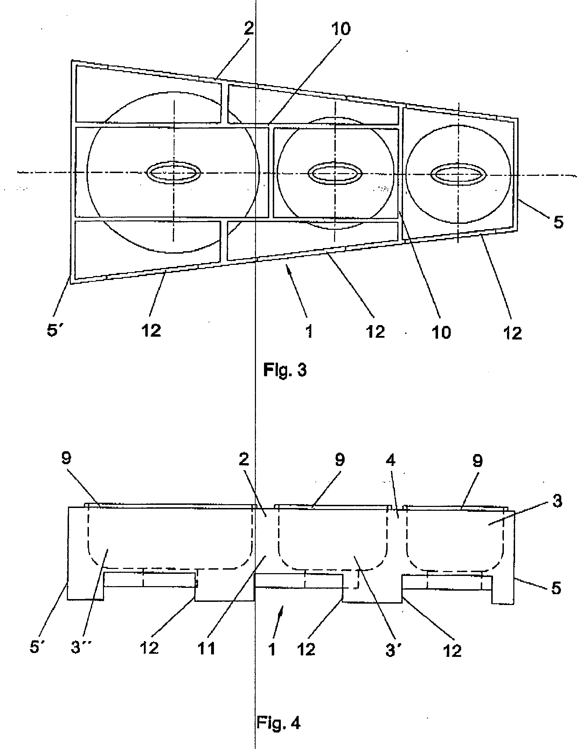

Die Figuren 1 bis 4 zeigen einen Reagenzträger 1 zum Einsetzen in ein nicht dargestelltes Analysegerät. Der als Einwegbehälter ausgebildete Reagenzträger 1 weist einen Tragkörper 2 aus Kunststoff mit wenigstens einer darin ausgebildeten Kavität 3, 3', 3" auf. Vorliegend sind in dem Tragkörper drei nebeneinander entlang einer geraden Linie angeordnete Kavitäten 3, 3', 3" vorgesehen. Die Kavitäten 3, 3', 3" werden jeweils mit Reagenzien (nicht dargestellt) für die Analyse von Körperflüssigkeiten, insbesondere von Blutserum und Blutplasma gefüllt.

Der dargestellte Reagenzträger 1 ermöglicht es, die für die Analyse in dem Analysegerät jeweils benötigte Reagenz bzw. eine Kombination von Reagenzien in einem einzigen Reagenzträger 1 bereit zu stellen. Dabei enthalten die Kavitäten 3, 3', 3" die jeweils für eine Einzelmessung benötigte Menge der Reagenzien. Hierdurch kann für die Analyse jeweils eine unter definierten Bedingungen gelagerte Menge an Reagenzien zur Verfügung gestellt werden. Eine Veränderung der Reagenzien aufgrund längerem Kontakt mit Luft wird auf diese Weise vermieden.

Der Tragkörper 1 weist eine längliche Grundform mit zwei Längsseiten 4, 4' und zwei Querseiten 5, 5'auf. Dabei sind die Längsseiten nicht parallel, sondern wie dargestellt winklig zueinander angeordnet. Entsprechend sind die Querseiten 5, 5' unterschiedlich lang. Die Längsseiten 4, 4' schließen einen Winkel zwischen 10° und 20° ein, insbesondere zwischen 13° und 17°. Dabei sind die Längsseiten. 4, 4'25 mm bis 35 mm lang, insbesondere zwischen 28 mm und 32 mm. Die kürzere Querseite 5 hat eine Länge zwischen 7 mm und 9 mm, während die längere Querseite 5' zwischen 14 und 18 mm lang ist.

Die Kavitäten 3, 3', 3" sind unterschiedlich groß. Das Volumen der kleinen Kavität 3 beträgt zwischen 250 ml und 350 ml, das Volumen der mittleren Kavität zwischen 100 ml und 150 ml und das Volumen der großen Kavität zwischen 60 ml und 100 ml.

Wie insbesondere aus Figur 2 ersichtlich ist, weist jede Kavität eine kreisförmige Entnahmeöffnung 6 an der Oberseite des Tragkörpers 2 und darüber hinaus eine Befüllöffnung 7 auf. Die länglich, insbesondere oval ausgebildete Befüllöffnung 7 ist bei der dargestellten Ausführungsform an der Unterseite des Tragkörpers 2 angeordnet und liegt der Entnahmeöffnung 6 gegenüber.

Die Öffnungsfläche der Befüllöffnung 7 ist dabei kleiner als die Öffnungsfläche der Entnahmeöffnung 6. Diese Gestaltung macht es einerseits möglich, Reagenzien beispielsweise mit einer Pipettiernadel aus den Kavitäten 3, 3', 3" zu entnehmen, ohne dass die Pipettiernadel hierfür besonders genau positioniert werden müsste. Erfindungsgemäß ist dabei die Öffnungsfläche der Befüllöffnung 7 kleiner als 20% insbesondere kleiner als 10% der Öffnungsfläche der Entnahmeöffnung 6. Hierdurch kann ein besonders geringer Gasanteil in den mit Reagenzien befüllten Kavitäten erreicht werden.

Gemäß der vorliegenden Erfindung beträgt bei einer mit flüssiger Reagenz befüllten Kavität 3, 3' bzw. 3" die über dem Flüssigkeitsspiegel verbleibende Luft- bzw. Gasblase weniger als 2 % des Volumens der jeweiligen Kavität 3, 3', 3". Vorteilhafter Weise nimmt die Luft- bzw.

Gasblase weniger als 1 %, insbesondere weniger als 0,5% des Volumens der jeweiligen Kavität 3, 3', 3" ein.

Um ein Austreten der Reagenzien aus den Kavitäten 3, 3', 3" zu verhindern, sind die Entnahmeöffnung 6 und die Befüllöffnung 7 jeweils mit einer nicht dargestellten Deckfolie verschlossen. Als Deckfolie kann insbesondere eine Kunststofffolie verwendet werden, welche mit dem Tragkörper 2 verschweißt ist. Um die Verbindung mit der Deckfolie zu erleichtern, ist an dem Tragkörper 2 jeweils um die Kavität 3, 3', 3" ein vorstehender Wulst 9 ausgebildet. Die Deckfolie kann im Bereich des Wulstes 9 oder entlang der gestrichelt dargestellten Verbindungslinie 8 mit Tragkörper 2 verbunden sein.

Zur Erzielung einer hohen Stabilität weist der Tragkörper 2 auf der Unterseite angeordnete sich kreuzende Verstärkungsrippen 10 auf. Zudem hat der Tragkörper eine umlaufende Seitenwandung 11, deren Abschnitte die Längsseiten 4, 4' und die Querseiten 5, 5' bilden. An die Seitenwandung 11 grenzt dabei die flächige Oberseite 12 des Tragkörpers, in der die Entnahmeöffnungen 6 der Kavitäten 3, 3', 3" vorgesehen sind. Zudem sind in den die Längsseiten 4, 4' bildenden Abschnitten der Seitenwandung 11 jeweils drei Ausschnitte 12 vorgesehen, welche zur Fixierung im Analysegerät verwendet werden können.

Der erfindungsgemäße Reagenzträger kann eine maschinenlesbare Information (nicht dargestellt) über die in den Kavitäten 3, 3', 3" enthaltenen Reagenzien enthalten. Die maschinenlesbare Information kann in Form eines Strich- oder Punktcodes an dem Reagenzträger vorgesehen sein.

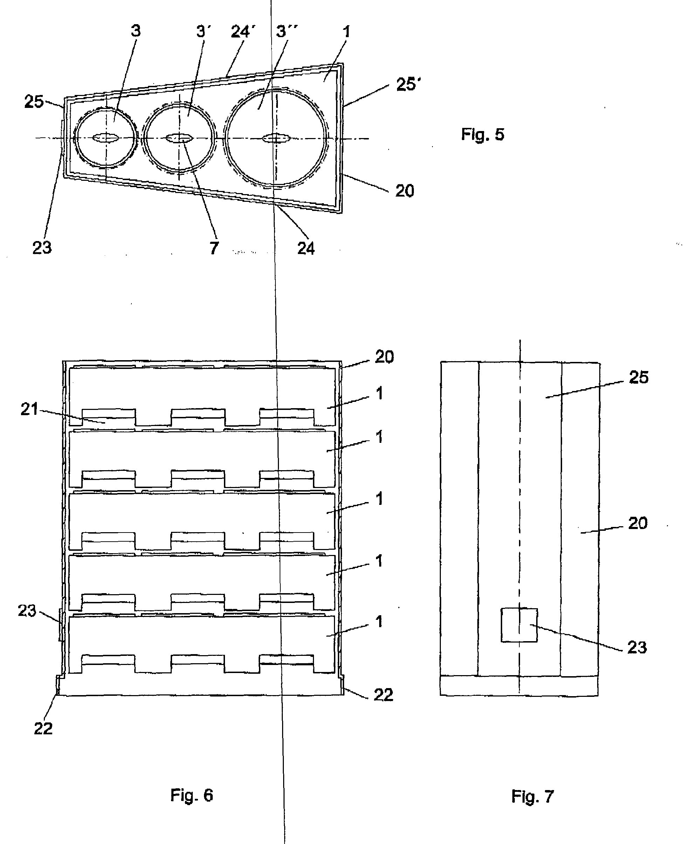

Die Figuren 5 bis 7 zeigen schematisch ein Transportbehältnis 20 mit einem Aufnahmeraum 21, in dem eine Mehrzahl von zuvor beschriebenen Reagenzträgern 1 übereinander aufgeschichtet enthalten sind. Die Form des Transportbehältnisses 20 ist an die Außenform der Reagenzträger 1 angepasst, wie insbesondere Figur 5 entnommen werden kann. Entsprechend weist das Transportbehältnis 20 winklig zueinander angeordnete Längsseiten 24, 24' sowie eine kürzere und eine längere Querseite 25, 25' auf.

Das dargestellte Transportbehältnis 20 ermöglicht nicht nur den sicheren Transport der Reagenzträger 1. Die Reagenzträger 1 können hierin dem Analysegerät zugeführt werden. Hierzu weist das Transportbehältnis 20 einen Verbindungsabschnitt 22 zum Einsetzen in das Analysegerät auf, über den die Reagenzträger automatisch einzeln von unten aus dem Aufnahmeraum 21 entnommen werden können.

Das Transportbehältnis 20 weist eine maschinenlesbare Information über den wenigstens einen in dem Aufnahmeraum 21 enthaltenen Reagenzträger 1 und/oder die in dem wenigstens einen Reagenzträger 1 enthaltenen Reagenzien auf. Bei der dargestellten Ausführungsform ist die Information in einem in oder an dem Transportbehältnis 20 angeordneten Chip 23 gespeichert. Anstelle eines Chips 23 können jedoch auch andere maschinenlesbare Informationsspeicher eingesetzt werden.

Dabei enthält die gespeicherte maschinenlesbare Information über die in dem Aufnahmeraum 21 enthaltenen Reagenzträger 1. Dies macht es möglich, das Transportbehältnis 20 mit Reagenzträgern 1 zu bestücken, welche mit verschiedenen Reagenzien befüllt sind, um dem Analysegerät die für bestimmte Analysen oder Analysenkombinationen jeweils erforderlichen Reagenzien zuzuführen. Dabei ermöglicht die erfindungsgemäße Gestaltung mit an dem Transportbehältnis 20 angeordneter maschinenlesbarer Information eine große Flexibilität, da die Reagenzträger 1 mit unterschiedlichen Reagenzien kundenspezifisch zusammengestellt werden können. So können entsprechend dem Kundenwunsch das Transportbehältnis 20 mit den verschieden befüllten Reagenzträgern 1 bestückt werden, Das Analysegerät kann der an dem Transportbehältnis 20 gespeicherten Information dennoch automatisch entnehmen, welche Reagenzien in den einzelnen Reagenzträgern 1 enthaltenen sind, um die Analysen entsprechend durchzuführen.

Zudem ermöglicht die Speicherung von Kalibrierungsdaten für die anhand der Reagenzien durchzuführenden Analysen, die Genauigkeit der Analysen zu erhöhen. So können für jeden einzelnen Reagenzträger 1 die jeweiligen Kalibrierungsdaten gespeichert werden. Dies ist deshalb sinnvoll, da die Eigenschaften der Reagenzien die Messgenauigkeit beeinflussen können. Indem entsprechende Korrekturdaten gespeichert werden, ist es möglich, die tatsächlichen Messergebnisse zu korrigieren und auftretende Fehler damit zu verringern.

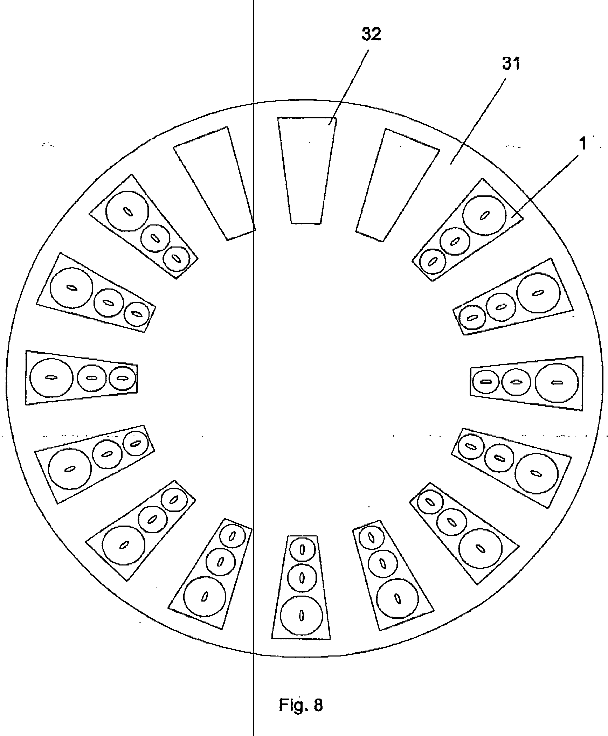

Figur 8 zeigt schematisch eine Halteplatte 31 eines Analysegeräts in Draufsicht. In der Halteplatte sind entlang eines Kreises nebeneinander Aufnahmen 32 vorgesehen, in die die Reagenzträger 1 eingesetzt und nach Gebrauch wieder entnommen werden können. Die Form und die Abmessungen der Aufnahmen 32 entsprechen denjenigen der Reagenzträger 1, weshalb insoweit auf die obige Beschreibung Bezug genommen wird. Durch Drehung der Halteplatte 31 um eine Mittelachse kann der jeweils benötigte Reagenzträger 1 an die gewünschte Position gebracht werden. Die Figur 8 illustriert somit, wie aufgrund der erfindungsgemäßen Gestaltung eine große Anzahl von Reagenzträgern 1 auf der Halteplatte 31 angeordnet werden kann.

Bezugszeichenliste
- 1: Reagenzträger
- 2: Tragkörper
- 3, 3', 3": Kavität
- 4, 4': Längsseite
- 5, 5': Querseite
- 6: Entnahmeöffnung
- 7: Befüllöffnung
- 8: Verbindungslinie
- 9: Wulst
- 10: Verstärkungsrippen
- 11: Seitenwandung
- 12: Ausschnitte
- 20: Transportbehältnis
- 21: Aufnahmeraum
- 22: Verbindungsabschnitt
- 23: Chip
- 24, 24': Längsseite
- 25, 25': Querseite
- 31: Halteplatte
- 32: Aufnahme

## Patentansprüche

1. Reagenzträger (1) mit einem Tragkörper (2) zum Einsetzen in ein Analysegerät und mit wenigstens einer in dem Tragkörper (2) ausgebildeten Kavität (3 3', 3") zur Aufnahme eines Reagenz für eine Untersuchung einer Körperflüssigkeit, insbesondere von Blutserum oder Blutplasma, dadurc **gekennzeichnet**, dass der Tragkörper (2) eine längliche Grundform mit Längsseiten (4, 4') und Querseiten (5, 5') aufweist und dass die Querseiten (5, 5') unterschiedlich lang sind.

2. Reagenzträger nach Anspruch 1, **dadurch gekennzeichnet, dass** die Längsseiten (4, 4') winklig zueinander angeordnet sind und insbesondere einen Winkel zwischen 10° und 20° einschließen, vorzugsweise zwischen 13° und 17°.

3. Reagenzträger nach Anspruch 1 oder 2, **dadurch gekennzeichnet, dass** mehrere, insbesondere eine erste, eine zweite und eine dritte Kavität (3, 3', 3") vorgesehen sind.

4. Reagenzträger nach Anspruch 3, **dadurch gekennzeichnet, dass** die Kavitäten (3, 3', 3") unterschiedlich groß sind und insbesondere das Volumen der ersten Kavität (3") 250 bis 350 ml und/oder das Volumen der zweiten Kavität (3') 100 bis 150 ml und/oder das Volumen der dritten Kavität (3) 60 bis 100 ml beträgt.

5. Reagenzträger nach Anspruch 3 oder 4, **dadurch gekennzeichnet, dass** die Kavitäten (3, 3', 3") nebeneinander entlang einer geraden Linie angeordnet sind.

6. Reagenzträger nach einem der Ansprüche 1 bis 5, **dadurch gekennzeichnet, dass** in der wenigstens einen Kavität (3, 3', 3") ein Reagenz enthalten ist.

7. Reagenzträger nach einem der Ansprüche 1 bis 6, **dadurch gekennzeichnet, dass** die wenigstens eine Kavität (3, 3', 3") eine Entnahmeöffnung (6) an der Oberseite des Reagenzträgers (1) und eine Befüllöffnung (7) aufweist.

8. Reagenzträger nach Anspruch 7, **dadurch gekennzeichnet, dass** die Befüllöffnung (7) an der Unterseite des Reagenzträgers (1) angeordnet ist.

9. Reagenzträger nach Anspruch 7 oder 8, **dadurch gekennzeichnet, dass** die Öffnungsfläche der Befüllöffnung (7) kleiner als die Öffnungsfläche der Entnahmeöffnung (6) ist.

10. Reagenzträger nach Anspruch 9, **dadurch gekennzeichnet, dass** die Öffnungsfläche der Befüllöffnung (7) kleiner als 20 Prozent, insbesondere kleiner als 10 Prozent der Öffnungsfläche der Entnahmeöffnung (6) ist.

11. Reagenzträger nach einem der Ansprüche 7 bis 10, **dadurch gekennzeichnet, dass** die Befüllöffnung (7) eine längliche, insbesondere ovale Form aufweist.

12. Reagenzträger nach einem der Ansprüche 1 bis 11, **dadurch gekennzeichnet, dass** die Entnahmeöffnung (6) und/oder die Befüllöffnung (7) durch jeweils eine Deckfolie verschlossen sind.

13. Reagenzträger nach einem der Ansprüche 1 bis 12, **dadurch gekennzeichnet, dass** das Reagenz in der wenigstens einen Kavität (3, 3', 3") in flüssiger Form enthalten ist.

14. Reagenzträger nach Anspruch 13, **dadurch gekennzeichnet, dass** die über dem Flüssigkeitsspiegel des Reagenz verbleibende Luft- bzw. Gasblase weniger als 2 Prozent des Volumens der jeweiligen Kavität (3, 3', 3") einnimmt.

15. Reagenzträger nach Anspruch 13 oder 14, **dadurch gekennzeichnet, dass** die über dem Flüssigkeitsspiegel des Reagenz verbleibende Luft- bzw. Gasblase weniger als 1 Prozent insbesondere weniger als 0,5 Prozent des Volumens der jeweiligen Kavität (3, 3', 3") einnimmt.

16. Reagenzträger nach einem der Ansprüche 1 bis 15, **dadurch gekennzeichnet, dass** der Reagenzträger (1) eine maschinenlesbare Information über das in der wenigstens einen Kavität (3, 3', 3") enthaltene Reagenz bzw. die in den Kavitäten enthaltenen Reagenzien aufweist, insbesondere in Form eines Strich- oder Punktcodes.

17. Transportbehältnis (20) mit einem Verbindungsabschnitt (22) zum Einsetzen in das Analysegerät und mit wenigstens einem Aufnahmeraum (21) für eine Mehrzahl von Reagenzträgern (1), wobei in dem Aufnahmeraum (21) wenigstens ein Reagenzträger (1) nach einem der vorangehenden Ansprüche enthalten ist.

18. Transportbehältnis nach Anspruch 17, **gekennzeichnet durch** eine maschinenlesbare Information über den wenigstens einen in dem Behältnis enthaltenen Reagenzträger (1) und/oder über die in dem wenigstens einen Reagenzträger (1) enthaltenen Reagenzien.

19. Transportbehältnis nach Anspruch 18, **dadurch gekennzeichnet, dass** die maschinenlesbare Information in einem an oder in dem Transportbehältnis (20) vorgesehenen Chip (23) gespeichert ist.

20. Transportbehältnis nach Anspruch 18 oder 19, **dadurch gekennzeichnet, dass** die maschinenlesbare Information des Transportbehältnisses (23) Kalibrierungsdaten für die anhand der Reagenzien durchzuführenden Analysen enthält.
